# EUROPEAN PATENT APPLICATION

(11) **EP 2 096 749 A1**
(43) Date of publication of application: **02.09.2009**
(21) Application number: 09002545.3
(22) Date of filing: 24.02.2009
(51) Int. Cl.: H02P 7/28, G01P 3/48, H04L 27/02, H04L 27/06, H04L 27/22

(54) **Pulse count control for brushed DC motor driven by pulse with modulation**

(30) Priority: 29.02.2008 GB 0803737
(71) Applicant: Melexis NV, 8900 Leper (BE)
(72) Inventor: Lambrechts, Marc, 3980 Tessenderlo (BE); Degois, Jerome, 3980 Tessenderlo (BE)
(74) Representative: Wilson Gunn

(57) **Abstract**

The present invention provides a method of determining the occurrences of pulses for implementing a pulse count monitoring method for a driving a brushed DC motor driven by a pulse width modulated (PWM) driving current. The method comprises acquiring the driving current signal; performing peak detection on the acquired signal; identifying the largest peaks and thus determining the occurrence of pulses. The peak detect is implemented by fast peak detection or diode peak detection operable to detect appropriate peak widths as determined by the chosen PWM frequency, duty cycle and PWM pulse height.

## Description

The present invention relates to driving of a brushed DC motor with a PWM input current.

In order to monitor the rotor position in a Brushed DC motor, one applicable method is pulse count. This involves counting the pulses generated in the coil current every half cycle by the power supply brushes short circuiting the power supply. This allows the speed and position of the motor to be reliably estimated.

Pulse counting is however only usually applicable to low current motors because these smaller motors are driven by a fixed voltage supply on which pulses can easily be detected. For higher current brushed DC motors an additional rotor sensor is required, which may typically be an optical sensor or a Hall sensor. Alternatively, one may choose to use a Brushless DC motor instead. All of these are however more expensive solutions and require greater complexity to put into practise.

One way to apply a higher current to a brushed motor more efficiently is by PWM driving which involves driving the motor with a series of pulses rather than a constant input. By varying the duty cycle of the PWM current, essentially the ratio of the time that the current flows to the times when it is switched off, the power supplied can be varied readily and accurately. Unfortunately, to date, pulse count systems have not been compatible with PWM driving because it is very difficult to directly detect both motor pulses in any one cycle, the motor pulses tending to be swamped by PWM pulses.

It is therefore an object of the present invention to provide a method of operating a pulse count rotor monitoring method in a brushed DC motor having a PWM supply.

In accordance with a first aspect of the present invention there is provided a method of determining the occurrences of pulses for implementing a pulse count monitoring method for a brushed DC motor driven by a pulse width modulated (PWM) driving current comprising the steps of: acquiring the driving current signal; performing peak detection on the acquired signal; identifying the largest peaks and thus determining the occurrence of pulses.

By performing peak detection (peak detection meaning detecting minima, maxima or both), the overall envelope of the current waveform can be regenerated and the highest peaks identified as motor pulses, since these being essentially short circuits will have greater magnitude than the PWM current pluses. This allows pulses to be identified in a PWM driving signal.

In accordance with a second aspect of the present invention there is provided a method of driving a brushed DC motor comprising the steps of applying a PWM driving current to the motor and monitoring the motor position by means of pulse counting wherein pulse occurrence is determined according to the method of the first aspect of the present invention.

The method of the second aspect of the present invention may incorporate any or all features of the method of the first aspect of the present invention as are desired or as are appropriate.

In accordance with a third aspect of the present invention there is provided a driver for a brushed DC motor, the driver operable to control the driving of a brushed DC motor in accordance with the methods of the first and/or second aspects of the present invention.

The driver of the third aspect of the present invention may incorporate any or all features of the methods of the first and/or second aspects of the present invention as are desired or as are appropriate.

In accordance with a fourth aspect of the present invention there is provided a brushed DC motor incorporating a driver in accordance with the third aspect of the present invention and/or operated in accordance with the methods of the first and/or second aspects of the present invention.

The motor of the fourth aspect of the present invention may incorporate any or all features of the driver of the third aspect of the present invention or the methods of the first and/or second aspects of the present invention as are desired or as are appropriate.

The largest peaks may be identified by tracking the detected peaks against time. This provides a good recreation of the overall envelope of the driving current waveform.

The driving current can be provided at any suitable PWM duty cycle and/or at any suitable PWM frequency. The on current PWM pulses may be of any suitable magnitude. The peak detect is operable to detect appropriate peak widths as determined by the chosen PWM frequency, duty cycle and PWM pulse height.

The peaks may be detected by any suitable peak detection method such as fast peak detection. Alternatively other methods of peak detection may be used including and not limited to diode peak detection. Diode peak detection in comparison with fast peak detection however has the disadvantages of slower detection and inaccuracy caused by the diode voltage drop. The fast peak detection may be carried out be appropriate circuitry or by a suitably programmed microcontroller. If the fast peak detection is carried out by dedicated circuitry, the dedicated circuitry may comprise a comparator and one or more amplifiers. The comparator may be operable to compare the present current signal with the output of an operational amplifier in series with the output of the comparator. This allows the output of the operational amplifier to adjust the voltage input to the comparator to therefore act as a suitable reference for the comparator. There may be a suitable combination of resistance and capacitance provided between the comparator and the operational amplifier.

The pulses detected by the above method may be processed in a conventional manner to determine motor speed and/or position. Such processing may include filtering the pulses and/or incrementing one or more counters.

The motor may be driven through a H-bridge arrangement. The current signal for peak detection may be monitored across a shunt resistor connected in series with the H-bridge. The shunt resistor may have any suitable resistance value. In one example, it may have a resistance of the order of 10mΩ.

In order that the present invention is more clearly understood, one embodiment will now be described further herein, by way of example only, and with reference to the accompanying drawings in which:
- Figure 1: is an illustration of a current waveform in a brushed DC motor driven at a constant input power;
- Figure 2: is an illustration of a current waveform in a brushed DC motor driven using pulse width modulation (PWM) at a constant rate;
- Figure 3: is an illustration of a the outcome of oscilloscope peak detection on the current waveform of figure 2;
- Figure 4: is an expanded view of one peak in the signal due to the changing PWM current;
- Figure 5: is a schematic block diagram of the layout of a motor and detection means for detecting such signals;
- Figure 6: is a schematic block diagram of the layout of fast peak detection circuitry for implementing the present invention;
- Figure 7: is an illustration of the output of the fast peak detection compared to its input current waveform;
- Figure 8: is a further illustration of the output of the fast peak detection compared to its input current waveform, wherein oscilloscope peak detection has been applied to the input current wave form;
and
- Figure 9: is a schematic block diagram of the layout of a motor and motor controller for implementing the present invention.

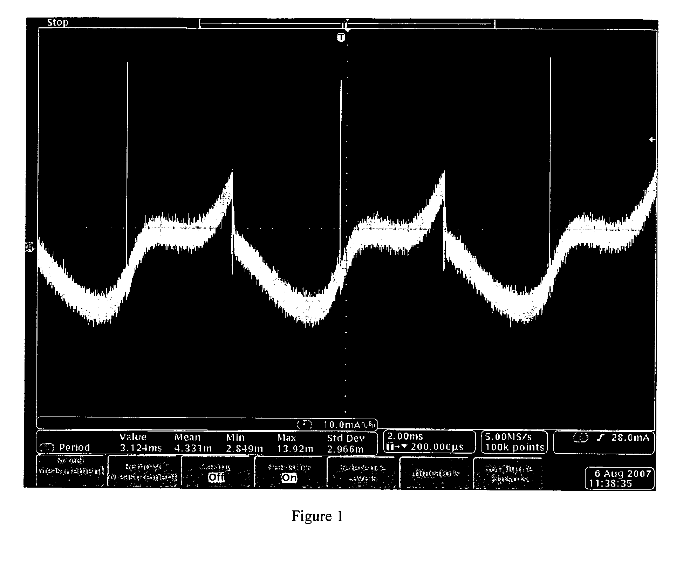

The present invention relates to the use of pulse detection for monitoring the speed and/or position of a brushed DC motor driven by a PWM driving current. Turning first to figure 1, a typical driving current waveform for a brushed DC motor operating with a constant input voltage is shown. The current waveform is obtained from a shunt resistor in series with the motor. In this example, the input voltage is approximately 12V and the resultant signal frequency is around 145Hz. As can clearly be seen, there are two pulses per period, which correspond to the short circuits caused by the brushes of the motor on the power supply twice per rotation. By counting the pulses, an estimate of the motor speed and position is obtained.

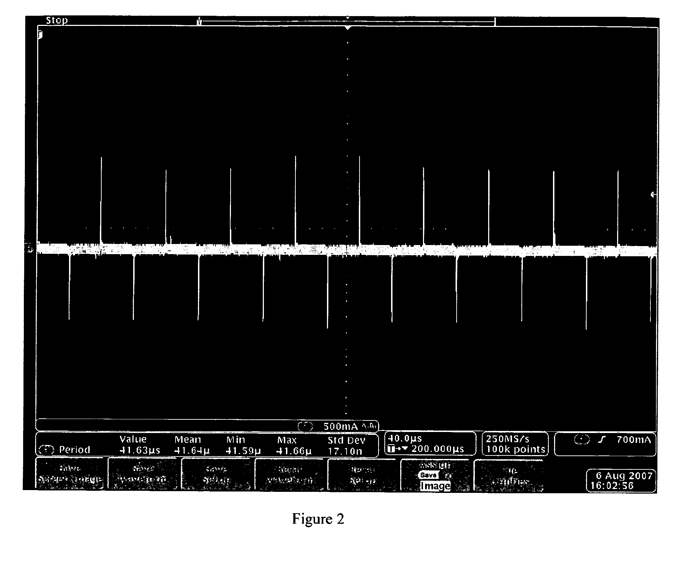

Turning now to figure 2 a PWM current input signal for a motor is shown. As previously, this is a signal measured on a shunt resistor in parallel with the motor. The PWM input signal comprises a series of PWM pulses at a frequency of around 23kHz (or 300 per rotation cycle, if the motor is operating at the same speed as that in figure 1). The pulses are of the order of 800mA on a 10 mΩ shunt.

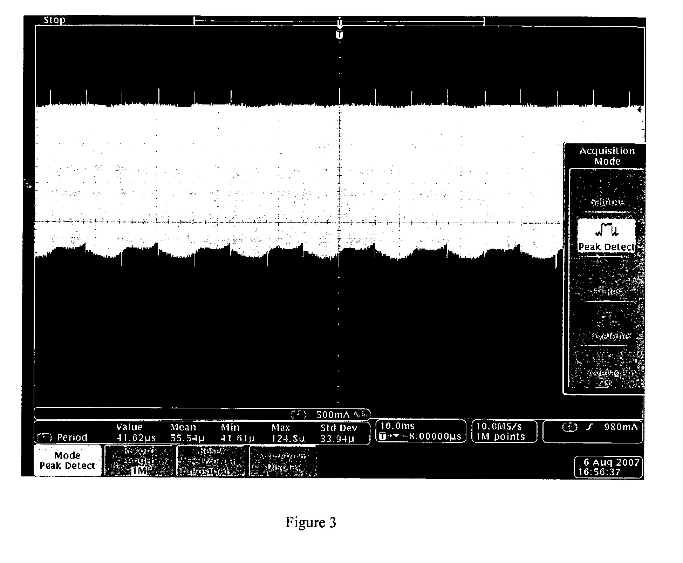

Performing an oscilloscope peak detect (peak detection meaning detecting minima, maxima or both) on the driving current signal of a motor with a PWM input as shown in figure 2 results in a waveform of the type shown in figure 3. This provides a good recreation of the overall envelope of the driving current waveform and the peaks due to motor pulses are still visible alongside the peaks due to PWM pulses. In fact, the motor pulses create much larger peaks and thus discrimination by peak size enables motor pulses to be identified and thus for pulse counting to be used to monitor the speed and/or position of the motor.

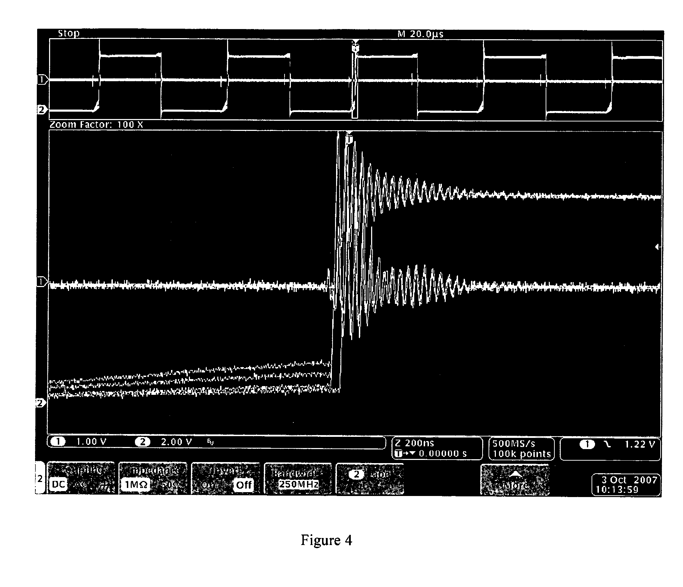

Turning now to figure 4, an expanded view of a PWM pulse is shown. The trace 1, running along the centre of the diagram illustrates the current variation experienced by the motor during the PWM pulse indicated by trace 2. In the example shown, based on that in the earlier figures 1-3, the ringing signal on the PWM pulse has peaks of about 20ns in duration. Accordingly, fast peak detection techniques are preferred for implementing the invention.

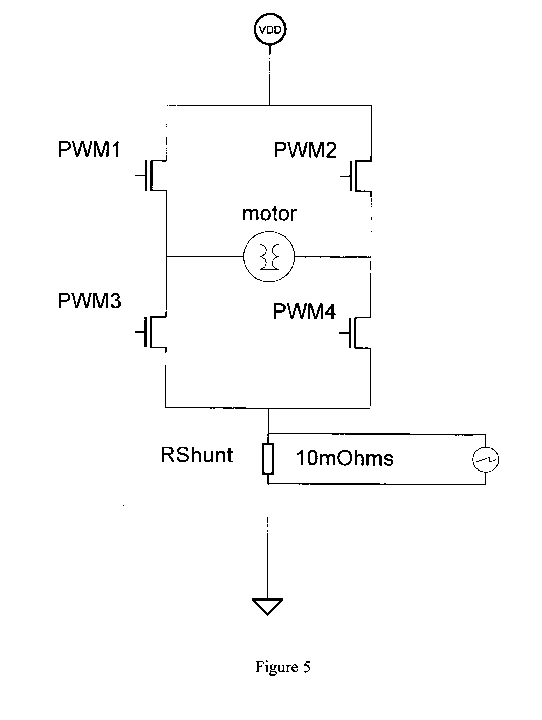

Turning now to figure 5, there is shown a schematic diagram of the basic driving arrangement of the motor. The motor driving current is controlled by the switching of PWM transistors PWM1, PWM2, PWM3 and PWM4 arranged with the motor in the form of a H-bridge. In series with the motor is a shunt resistor RShunt (here shown to have a resistance of 10mΩ). The driving current signal for fast peak detection is readout across RShunt.

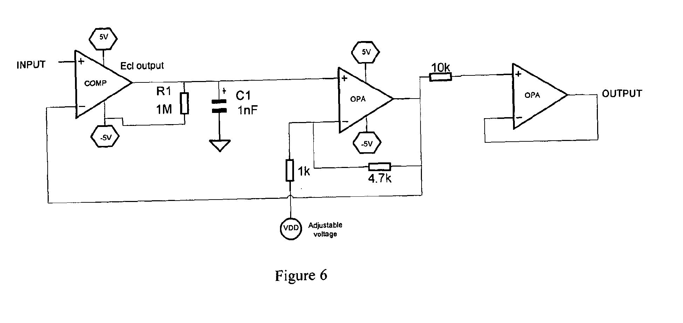

In figure 6 is shown a circuitry arrangement for implementing fast peak detection. The circuitry comprises a comparator COMP with its output Ecl connected to resistor R1, capacitor C1 and a first operational amplifier OPA. The input from the driving current signal for fast peak detection is fed to the non-inverting input of COMP and the output of the first operational amplifier is fed to the inverting input of COMP.

When a positive voltage peak occurs on the input then the Ecl comparator COMP charges the capacitor C1. The resistor R1 discharges capacitor C1 so the next lower or higher peak level can be detected. At the comparator output Ecl, the voltage typically varies between -0.8V and 1.8V. The first operational amplifier is provided to adjust the voltage to match the input signal. This means that the adjustable voltage will play the role of a reference for the input comparator. In order to operate effectively in the present example, the first operational amplifier must have a bandwidth of the order of 50MHz to follow the input signal.

In the example shown, a second operational amplifier is provided to act as an output buffer.

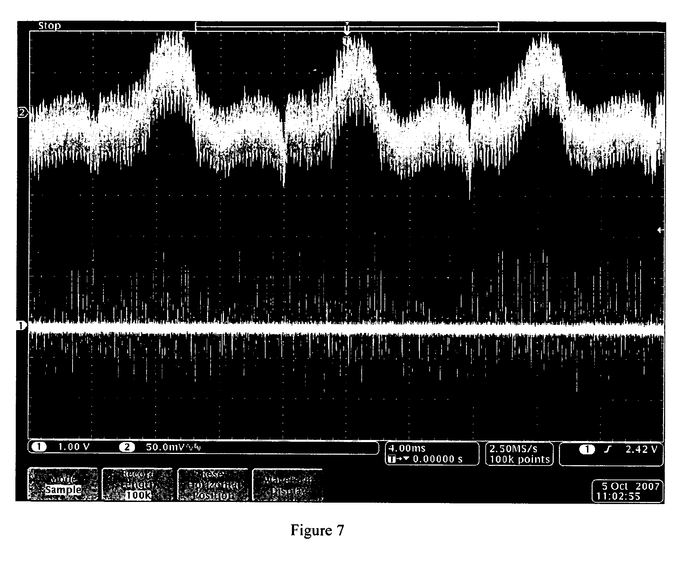

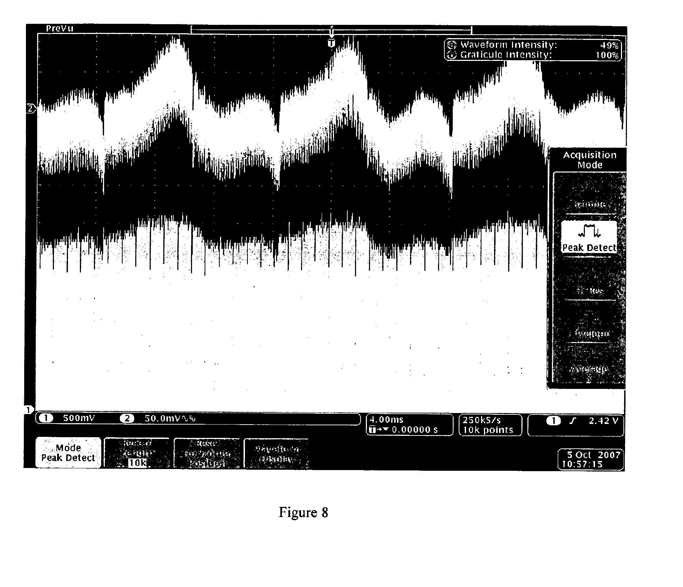

Turning now to figure 7, the impact of the fast peak detection on an input signal is shown. The lower trace 1, shows an input signal, the upper trace 2, is the trace 1 subjected to fast peak detection. As can be clearly seen, the fast peak detection provides a signal envelope of the type generated in standard brushed DC motor operation and thus the largest peaks can be readily recognised as pulses and standard pulse count techniques can be applied to such a signal. Figure 8 shows the contrast between the same trace 2 and a different trace 1, wherein in this case, trace 1 is an oscilloscope peak detect of the input signal.

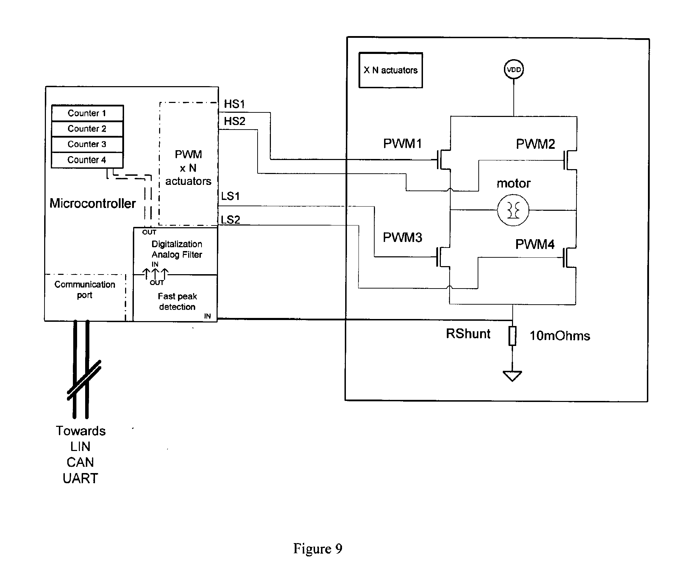

Turning now to figure 9, a full system for implementing the present invention is shown. As in figure 5, the motor is arranged in a H-bridge with transistors PWM1, PWM2, PWM3 and PWM4. The transistors PWM1, PWM2, PWM3, PWM4 are controlled by respective PWM actuators forming part of a dedicated microcontroller which acts as a motor controller. The driving current signal is collected from RShunt and fed to a fast peak detection unit within the microcontroller. This generates a signal in accordance with trace 2 on figures 7 and 8. This signal can be further processed with an analogue filter or digital circuit to thereby determine the existence of motor pulses. The motor pulses may be used to increment one or more of a plurality of counters provided within the microcontroller. The microprocessor may also be provided with a communication port allowing it to communicate with external systems. The communication port may be compatible with any suitable communication means including a bus such as a LIN, CAN or UART bus.

It is of course to be understood that the invention is not to be restricted to the details of the above embodiments which are described by way of example only.

## Claims

1. A method of determining the occurrences of pulses for implementing a pulse count monitoring method for a brushed DC motor driven by a pulse width modulated (PWM) driving current comprising the steps of: acquiring the driving current signal; performing peak detection on the acquired signal; identifying the largest peaks and thus determining the occurrence of pulses.

2. A method as claimed in claim 1 wherein largest peaks are identified by tracking the detected peaks against time.

3. A method as claimed in claim 1 or claim 2 wherein the peaks are detected by fast peak detection.

4. A method as claimed in claim 1 or claim 2 wherein the peaks are detected by diode peak detection.

5. A method as claimed in any preceding claim wherein the peak detect is operable to detect appropriate peak widths as determined by the chosen PWM frequency, duty cycle and PWM pulse height.

6. A method as claimed in any preceding claim wherein the detected pulses are processed by filtering the pulses and/or incrementing one or more counters to determine motor speed and/or position.

7. A method of driving a brushed DC motor comprising the steps of applying a PWM driving current to the motor and monitoring the motor position by means of pulse counting wherein pulse occurrence is determined according to the method of any one of claims 1 to 6.

8. A driver for a brushed DC motor, the driver operable to control the driving of a brushed DC motor in accordance with the methods of any one of claims 1 to 7.

9. A driver for a brushed DC motor as claimed in claim 8 wherein the peaks are detected by fast peak detection, the fast peak detection being carried out by a suitably programmed microcontroller.

10. A driver for a brushed DC motor as claimed in claim 8 wherein the peaks are detected by fast peak detection, the fast peak detection being carried out by dedicated circuitry comprising a comparator and one or more amplifiers.

11. A driver for a brushed DC motor as claimed in claim 10 wherein the comparator is operable to compare the present current signal with the output of an operational amplifier in series with the output of the comparator.

12. A driver for a brushed DC motor as claimed in claim 11 wherein there is a combination of resistance and capacitance provided between the comparator and the operational amplifier.

13. A driver for a brushed DC motor as claimed in any one of claims 8 to 12 wherein the driver is provided with a communication port allowing it to communicate with external systems.

14. A brushed DC motor incorporating a driver in accordance with any one of claims 8 to 13 and/or operated in accordance with the methods of any one of claims 1 to 7.

15. A brushed DC motor as claimed in claim 14 wherein the motor is driven through a H-bridge arrangement.

16. A brushed DC motor as claimed in claim 15 wherein the current signal for peak detection is monitored across a shunt resistor connected in series with the H-bridge.
